# EUROPÄISCHE PATENTSCHRIFT

(11) **EP 0 462 323 B1**
(45) Veröffentlichungstag und Bekanntmachung des Hinweises auf die Patenterteilung: **11.05.1994**
(21) Anmeldenummer: 90125830.1
(22) Anmeldetag: 31.12.1990
(51) Int. Cl.: B23B 5/12, B23Q 1/00

(54) **Schälmaschine**
Peeling machine
Machine à écroûter

(30) Priorität: 16.06.1990 DE 4019286
(43) Veröffentlichungstag der Anmeldung: 27.12.1991
(73) Patentinhaber: Th. Kieserling & Albrecht GmbH & Co., 42651 Solingen (DE)
(72) Erfinder: Glomb, Reiner, Dipl.-Ing., W-5620 Velbert (DE); Maresch, Peter, Dipl.-Ing., W-5650 Solingen (DE); Wagner, Ralf, Dipl.-Ing., W-5650 Solingen 1 (DE)
(74) Vertreter: Stachow, Ernst-Walther, Prof. Dr.

(56) Entgegenhaltungen:
- EP-A- 0 348 719
- DE-A- 2 220 984
- FR-A- 2 518 012

## Beschreibung

Die Erfindung betrifft eine Schälmaschine nach dem Oberbegriff von Patentanspruch 1 (Siehe DE-A-2849576). Schälmaschinen dieser Art dienen hauptsächlich dazu, aus warmgewalztem metallischem Rundmaterial sogenannten Blankstahl herzustellen. Dabei wird das stangenförmige Rundmaterial an seinem zylindrischen Umfang durch einen rotierenden Messerkopf geschält. Die Stange selbst wird gegen ungewollte Rotation gesichert axial durch eine Zentralbohrung im Messerkopf durch die Schälmaschine geführt. Der rotierende Messerkopf trägt drei oder mehr nach innen gerichtete Messer, die die Stange auf wendelförmiger Bahn schälen. Derartige Schälmaschinen werden bei Draht, Stangen und Rohren eingesetzt. Die derzeit gebräuchlichen Schälmaschinen arbeiten mit einem Einschubaggregat einlaufseitig vor dem Messerkopf, das aus zwei Rollenpaaren besteht und mit einem Spannwagen auslaufseitig des Messerkopfes, der den Stab gegen Verdrehen sichert und transportiert, wenn das letzte Ende des Stabes geschält wird.
Zusätzlich haben derartige Schälmaschinen unmittelbar vor und hinter dem Messerkopf Führungen, die das Werkstück zentrieren und und die vom Schälprozess ausgehenden Schwingungen dämpfen.

Moderne Schälmaschinen können den Vorschub, die Messerkopfdrehzahl und den Fertigdurchmesser der geschälten Stange oder des geschälten Rohres während des Betriebs verändern. Während die Vorschubgeschwindigkeit und die Messerkopfdrehzahl relativ einfach durch Steuerung der Antriebsmotoren erfolgen kann, muß die Messerverstellung zur Durchmesserveränderung der fertig geschälten Stange auf die rotierende Hohlwelle zugreifen und dort feinste Verstellbewegungen ausführen.

Aus der gattungsbildenden DE-A-2849576 ist eine Anlage aus mehreren Maschinen zur Stangenbearbeitung, unter anderen auch einer Schälmaschine bekannt, bei der die einzelnen Maschinen zum Einrichten der Werkzeuge auseinander gefahren werden können und für den Betrieb wieder zusammengeschoben werden. Nachteilig bei dieser Lösung ist, daß die Zugänglichkeit zu einzelnen Komponenten der Schälmaschine nicht berücksichtigt wird und daß die Steifigkeit der Schälmaschine durch die Verfahrbarkeit und die fehlende Verspannung mit dem Fundament beeinträchtigt wird.

Der Erfindung liegt die Aufgabe zugrunde, die gattungsbildende Schälmaschine so zu verändern, daß eine gute Zugänglichkeit einzelner Komponenten der Schälmaschine bei gleichzeitiger steifer Ausbildung der Gesamtheit aus den Baugruppen der Schälmaschine beim Betrieb erreicht werden.

Die Lösung dieser Aufgabe ist im Patentanspruch 1 wiedergegeben. Das Wesen der Erfindung liegt in der Kombination von Verfahrbarkeit der im Anspruch genannten Schälmaschinen - Baugruppen für den Einstellung, Wartung und Reparatur und der Verspannung der Baugruppen Einschub bis Schälmaschinengehäuse im Schälbetrieb. Dabei erfolgt die Verspannung der Baugruppen in Vorschubrichtung der zu schälenden Werkstücke. Alle Baugruppen, die am zu schälenden Werkstück angreifen, vom Vorschubaggregat bis zu dem Gehäuse, in dem der Messerkopf umläuft, werden an den Führungen augefädelt und axial zu einem Block verspannt und auf Druck vorgespannt
Nach Anspruch 2 ist bevorzugt vorgesehen, die Führungsschienen als Spannmittel vorzusehen. Die Führungsschienen wirken vorzugsweise als vorgespannte Zuganker.

Nach dem Merkmal von Anspruch 3 ist in Weiterbildung der Erfindung ein Führungsaggregat, das optional zwischen dem Messerkopf und dem Einschubaggregat angeordnet ist, auch an den Führungsschienen geführt und zwischen dem Schälmaschinengehäuse und dem Einschubaggregat positioniert und eingespannt.

Bevorzugt ist eine Ausgestaltung der Erfindung nach Anspruch 4 vorgesehen. Der Begriff "diametral" ist dabei so zu verstehen, daß zwei Führungsschienen mit der Drehachse des Messerkopfes einen Winkel zwischen 90° und 270° bilden. Der Abstand der Führungsschienen von der Drehachse ist nicht von großer Bedeutung. Je kleiner der Abstand von der Drehachse des Messerkopfes ist, desto günstiger ist jedoch der Kraftfluß. Eine Führungs- und Spannschiene ist im peripheren Bereich des Schälmaschinengehäuses vorgesehen.

In Weiterbildung der Erfindung sind die Merkmale von Anspruch 5 vorgesehen. Das Gehäuse der Messerverstellung ist vorzugsweise ringförmig ausgebildet und schließt die drehbar gelagerte Hohlwelle ein. Es ist, wie das Einschubaggregat und eine optional vorgesehene vordere Führung an den Führungsschienen geführt und für den Schälbetrieb am Gehäuse der Schälmaschine, in dem auch der rotierende Messerkopf gelagert ist, befestigt. Nach dem Lösen dieser Befestigung kann es axial entgegen der Vorschubrichtung des Schälgutes aus dem Schälmaschinengehäuse herausgezogen werden, nachdem die übrigen, einlaufseitig vor dein Messerkopf angeordneten Baugruppen abgezogen worden sind.

Bevorzugt ist eine Ausgestaltung der Erfindung nach Anspruch 6 vorgesehen. Damit werden zusätzliche Transportmittel für das Ausziehen der Baugruppe Messerverstellung aus dem Schälmaschinengehäuse überflüssig. Die einlaufseitig vor der Messerverstellung vorgesehenen Baugruppen sichern dabei die Baugruppe Messervestellung gegen Verkanten an den Führungsschienen.

Mit dem Merkmal von Anspruch 7 wird der Größe und dem Gewicht des Einschubaggregates Rechnung getragen. Damit wird für die Führungsschienen, an denen Einschubapparat, ggf. eine vordere Führung und ggf. eine Baugruppe Messerverstellung geführt sind eine bauliche Vereinfachung erreicht, die ohne die zusätzliche parallele Schiene für das Einschubaggregat mit seinen größeren Dimensionen und seinem wesentlich größeren Gewicht nicht möglich wäre.

Das Einschubaggregat ist das erste in der Reihe der Baugruppen, die auch an den Führungsschienen geführt sind. Diese erste Baugruppe ist nach Anspruch 8 mit einem Antrieb zum Verschieben der geführten Baugruppen in Richtung der Führungsschienen versehen. Durch eine wahlweise Kopplung der einzelnen Baugruppen, wie in Anspruch 9 vorgesehen, kann mit dem Antrieb für die erste Baugruppe, das ist regelmäßig das Einschubaggregat, zwischen beliebigen benachbarten Baugruppen ein gewünschter Zwischenraum erstellt werden, wie er für Wartungs-, Einstell- oder Reparaturabeiten benötigt wird.

Um einzelne Baugruppen seitlich von den Führungsschienen abnehmen zu können, sollen die in Frage kommenden Baugruppen entsprechend Anspruch 10 in Längsrichtung geteilt sein. "Längsrichtung" bedeutet eine Ebene parallel zu mindestens einer der Führungsschienen.

Ein Ausführungs beispiel der Erfindung wird im einzelnen anhand der Zeichnung erläutert. Dabei zeigen
- Fig. 1 :: eine schematisierte Darstellung einer Schälmaschine im Längsschnitt;
- Fig. 2 :: die Schälmaschine nach Fig.1 im auseinandergezogenen Zustand;

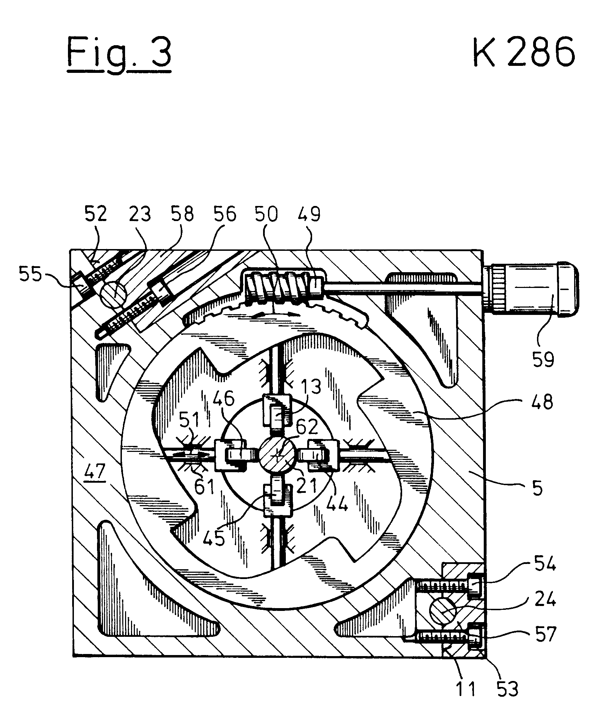

- Fig. 3 :: einen Schnitt nach Linie III-III in Fig.1

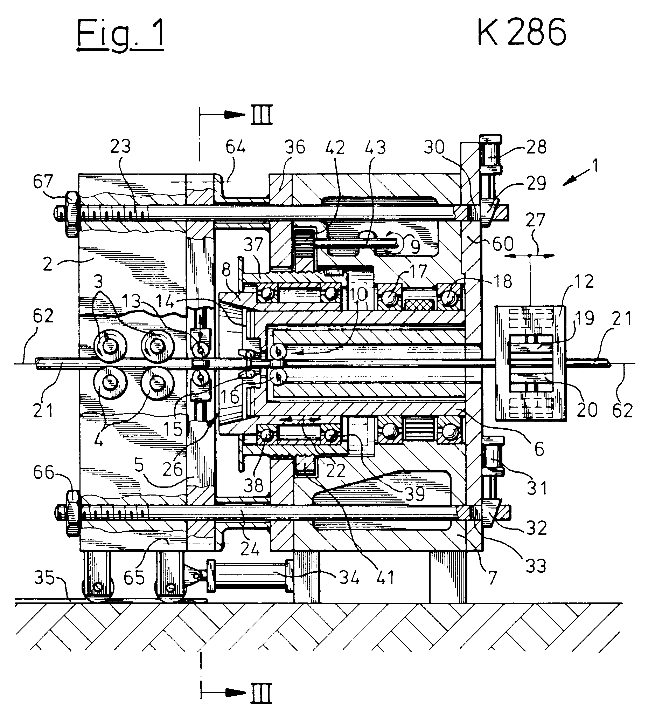

Fig.1 zeigt eine Stange 21, die in einer Schälmaschine 1 geschält wird. Die Schälmaschine besteht aus einem Einschubaggregat 2 mit darin drehbar gelagerten und in nicht dargestellter Weise drehangetriebenen Transportrollen 3, 4 einem Messerkopf 26 an einer Hohlwelle 6, die in einem Maschinengestell 7 auf bekannte Weise in Lagern 17, 18 drehangetrieben aufgenommen ist, einer hinteren Führung 10, die mit ihren Rollen 16 die weiter fortgeschrittene Stange am geschälten Abschnitt einspannt und einem Spannwagen 12, der gemäß Pfeil 27 verfahrbar ist und gegen Ende der Bearbeitung mit seinen Spannbacken 19, 20 die Stange 21 gegen Verdrehen sichert und aus der Schälmaschine herauszieht.

Der Messerkopf 26 befindet sich an der einlaufseitigen Stirnseite der Hohlwelle 6, in der eine Konushülse 8 in Durchlaufrichtung der Stange 21, wie mit dem Pfeil 22 angezeigt, durch Drehung gemäß Pfeil 9 an der Antriebswelle 43 bei umlaufender Hohlwelle 6 verschoben werden kann, mehreren Messerhaltern 14, die sich innen an dein Konus der Konushülse 8 radial abstützen und die bei axialer Verschiebung der Konushülse 8 in radialer Richtung zur Stange 21 verstellt werden. Die Messer 15 an den Messerhaltern 14 schälen entsprechend der Position der Messerhalter und der Konushülse eine Schicht einstellbarer Dicke von der Stange 21 ab. Die Schwingungen des Zerspanungsprozesses am Messerkopf werden von den Rollen 13 und 16 der vorderen und hinteren Führung 5 bzw. 10 gedämpft.

Das Einschubaggregat 2 sichert die Stange 21 gegen Verdrehen unter dem Schnittmoment, das im Messerkopf 26 in die Stange eingeleitet wird. Zusätzlich bringt es aufgrund eines nicht gezeigten Antriebs der Rollen 3, 4 die Vorschubkraft auf, um die Stange durch den Messerkopf 26 zu schieben.

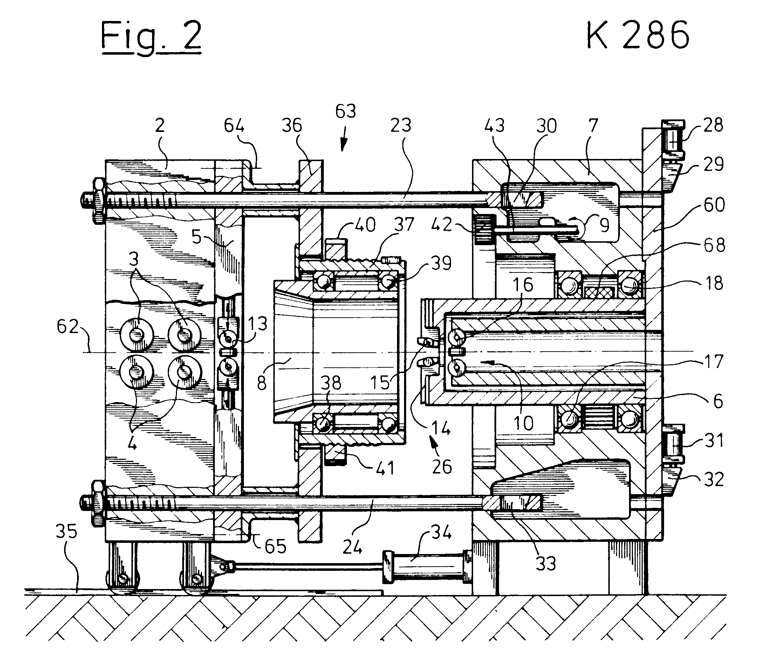

Die Messerverstellung während der Rotation der Hohlwelle 6 wird von einer Baugruppe 63 (Fig. 2) besorgt, die in Richtung der Drehachse 62 des Messerkopfes 26 in das Schälmaschinengehäuse 7 hineingefahren werden kann. Diese Baugruppe 63 der Messerverstellung umfaßt ein Traggerüst 36, das an Schienen 23, 24 geführt ist, eine Stellhülse 37, zwei Konushülsenlager 38, 39, die Konushülse 8 und eine Stellmutter 41, die auf ein Außengewinde an der Stellhülse 37 aufgeschraubt ist. Die Stellmutter trägt an ihrer Außenseite eine Verzahnung 40, die im zusammengefahrenen Zustand der Schälmaschine 1 (s. Fig.1) mit einem Zahnrad 42 im Schälmaschinengehäuse 7 kämmt. Das Zahnrad 42 wird in nicht näher gezeigter Weise von der Antriebswelle 43 gemäß Pfeil 9 zur Verstellung der radialen Lage der Schälmesser angetrieben.

Das vordere Führungssystem 5 einlaufseitig des Messerkopfes 26 umfaßt vier Führungsrollen 13, 44, 45, 46, die sternförmig um die zu schälende Stange 21 angeordnet sind und in Führungen 61 in Richtung des Pfeiles 51 in radialer Richtung zur Stange 21 verstellbar sind. Nach außen stützen sich Halter der Rollen 13, 44 - 46 an einem Kurvenring 48 ab, der bei Schwenkung in Richtung des Pfeiles 50 die Führungsrollen 13, 44 - 46 in radialer Richtung verschiebt. Die Schwenkung des Kurvenrings 48 besorgt ein Stellmotor 59, der eine im Gehäuse 47 der vorderen Führung ortsfest gehaltene Schnecke 49 antreibt, die mit einer Verzahnung auf dem Kurvenring 48 kämmt.

Das vordere Führungssystem wird nur für kleinere Durchmesser der Stange 21 benötigt und kann seitlich aus der Schälmaschine herausgenommen werden. Hierzu ist das an den Führungsschienen 23, 24 gehaltene Gehäuse 47 des Führungssystems 5 geteilt. Die Teilung erfolgt mit zwei Deckeln 57, 58, deren Trennfugen 11, 52 mit dem Gehäuse 47, die Führungen 23, 24 schneiden. Zum seitlichen Herausnehmen des vorderen Führungssystems werden die die Deckel haltenden Schrauben 53, 54, 55, 56 herausgedreht und die halbschalenförmigen Deckel 57, 58 abgenommen. Alsdann kann die gesamte vordere Führung 5 geschwenkt und seitlich aus der Schälmaschine herausgenommen werden.

Mit Hilfe der Führungsschienen 23, 24 werden die Gehäuse aller am Zerspanungsprozess beteiligten Baugruppen, das sind insbesondere das Einschubaggregat 2, das vordere Führungssystem 5 und das Schälmaschinengehäuse 7 mit der darin gelagerten Hohlwelle 6 mit dem Messerkopf 26 miteinander verbunden.

Die Länge der Führungsschienen 23, 24 wird mit den Voreinstellschrauben 66, 67 der Länge und Anzahl der zu verspannenden Baugruppen angepaßt. Das eigentliche Verriegeln erfolgt durch Zylinder 28, 31 die mit Spannkeilen 29, 32 über die Verschlußplatte 60 des Schälmaschinengehäuses 7 dieses mit dem Einschubaggregat 2 verspannen. Bei dem Aufbau der Vorspannung und der Verriegelung der gesamten Schälmaschine greifen die Spannkeile 29 in Durchbrüche 30, 33 an den Führungsschienen 23, 24 ein. Durch Betätigen der Zylinder 28, 31 ist die Vorspannung und Verriegelung der gesamten Schälmaschine leicht lösbar.

Die gesamte Schälmaschine 1 wird durch die Führungsschienen und deren Verriegelung zu einem Block verspannt und vorgespannt. Durch die diametrale Anordnung der Führungsschienen 23, 24 relativ zur Drehachse 62 ergibt sich ein guter Kraftfluß und eine Zentrierung der miteinander verbundenen Baugruppen 2, 5, 63 und 1 bzw. 7. Ein weiterer wesentlicher Vorzug besteht darin, daß die gesamte Schälmaschine zu Wartungszwecken, für Reparaturen oder Inspektionen mit minimalem Aufwand auseinander gezogen werden kann. Dieses Auseinanderziehen kann selektiv erfolgen, wobei entweder nur das Einschubaggregat 2 zurückgezogen werden kann (d.h. nach rechts in den Fig.1 und 2) oder das Einschubaggregat 2 in Verbindung mit dem vorderen Führungssystem 5 oder als letzte Alternative, wie in Fig.2 dargestellt, das Einschubaggregat 2, das vordere Führungssystem 5, und die Baugruppe 63 Messerverstellung vom Schälmaschinengehäuse 7 getrennt werden. Hierzu werden die genannten Baugruppen entsprechend der gewünschten Trennung z.B. durch Schrauben 64, 65 miteinander verbunden und von dein Zylinder 34, der das Einschubaggregat 2 auf zu den Führungsschienen 23, 24 parallelen Schienen 35 auf dem Fundament bewegt.

Insbesondere die in Fig.2 gezeigte, durch die Erfindung möglich gewordene Zugänglichkeit der Baugruppe 63 Messerverstellung, ohne daß hierzu ein Kran oder anderes schweres Gerät erforderlich wären wird als besonders vorteilhaft gesehen.

## Patentansprüche

1. Schälmaschine (1) für Stangen (21) und Rohre, die die folgenden Merkmale aufweist:
a) ein Einschubaggregat (2) einlaufseitig der Schälmaschine (1),
b) einen umlaufenden Messerkopf (26),
c) der Messerkopf (26) ist stirnseitig auf der Einlaufseite an einer im Maschinengestell (7) drehbar gelagerten Hohlwelle (6) ausgebildet,
d) Mittel (12) zum Ausziehen des fertiggeschälten Werkstücks aus der Schälmaschine (1),
e) mindestens zwei Führungsschienen (23, 24) am Gehäuse (7) der Schälmaschine (1),
f) die Führungsschienen (23, 24) erstrecken sich parallel zur Drehachse (62) des Messerkopfes (26),
**gekennzeichnet durch** die folgenden Merkmale:
g) das Einschubaggregat (2) und das Schälmaschinengehäuse (7) sind in Richtung der Drehachse (62) der Hohlwelle (6) relativ zueinander verfahrbar,
h) Mittel (23, 28, 29, 67) zum lösbaren Verspannen von Einschubaggregat (2) und Schälmaschinengehäuse (7).

2. Schälmaschine nach Anspruch 1, **gekennzeichnet durch** das folgende Merkmal:
i) die Führungsschienen (23, 24) sind Bestandteil der Mittel (23, 28, 29, 67) zum Verspannen von Einschubaggregat (2) und Schälmaschinengehäuse (7).

3. Schälmaschine nach einem der Ansprüche 1 oder 2 mit einem Führungssystem (5) für die zu bearbeitenden Stangen oder Rohre, zwischen dem Einschubaggregat (2) und dem Messerkopf (26), **gekennzeichnet durch** das folgende Merkmal:
j) das Führungssystem (5) vor dem Messerkopf (26) ist an den Schienen (23, 24) geführt und beweglich.

4. Schälmaschine nach Anspruch 1, **gekennzeichnet durch** das folgende Merkmal:
k) die Führungsschienen (23, 24) bilden mit der Drehachse (62) des Messerkopfes (26) einen Winkel zwischen 90 und 270 °.

5. Schälmaschine nach einem der Ansprüche 1, 2 oder 3 mit einem Führungssystem (5) für die zu bearbeitenden Stangen oder Rohre zwischen dem Einschubaggregat (2) und dem Messerkopf (26),
**gekennzeichnet durch** die folgenden Merkmale:
l) eine Baugruppe (62) Messerverstellung an der Hohlwelle (6) ist an den Schienen (23, 24) geführt,
m) die Baugruppe (63) Messerverstellung ist in ein Traggerüst (36) eingebaut, das in Achsrichtung (62) in das Schälmaschinengehäuse (7) für den Messerkopf (26) eingesteckt ist und den Messerkopf bzw. die ihn tragende Hohlwelle (6) einschließt.

6. Schälmaschine nach Anspruch 5, **gekennzeichnet durch** das folgende Merkmal:
n) Mittel (64, 65) zur Befestigung der Baugruppe (63) Messerverstellung an dem Führungssystem (5) einlaufseitig des Messerkopfes (26) oder am Einschubaggregat (2).

7. Schälmaschine nach Anspruch 1, **gekennzeichnet durch** das folgende Merkmal:
o) das Einschubaggregat (2) ist an mindestens einer zusätzlichen zu den anderen Führungsschienen (23, 24) parallel angeordneten Schiene (35) geführt.

8. Schälmaschine nach Anspruch 1, **gekennzeichnet durch** das folgende Merkmal:
p) am Einschubaggregat (2) ist ein Antrieb vorgesehen zur Bewegung in Richtung der Führungsschienen (23, 24).

9. Schälmaschine nach Anspruch 3, **gekennzeichnet durch** das folgende Merkmal:
q) Mittel (64, 65) zur Befestigung des einlaufseitig vor dem Messerkopf (26) angeordneten Führungssystems (5) am Einschubaggregat (2).

10. Schälmaschine nach Anspruch 1, **gekennzeichnet durch** die folgenden Merkmale:
r) mindestens eine an den Führungsschienen (23, 24) geführte Baugruppe (5) ist in Längsrichtung (62) geteilt,
s) die Trennfuge (52) der geteilten Baugruppe (5) geht durch die Führungsschienen (23).

## Claims

1. Peeling machine (1) for bars (21) and tubes, displaying the following features:
a) a feed unit (2) on the inlet side of the peeling machine (1),
b) a rotating cutter head (26),
c) the cutter head (26) is located at the face end on the inlet side on a hollow shaft (6) mounted in rotating fashion in the machine frame (7),
d) means (12) for extracting the finish-peeled workpiece from the peeling machine (1),
e) at least two guide rails (23, 24) on the housing (7) of the peeling machine (1),
f) the guide rails (23, 24) run parallel to the axis of rotation (62) of the cutter head (26),
**characterised by** the following features:
g) the feed unit (2) and the peeling machine housing (7) are capable of movement relative to each other in the direction of the axis of rotation (62) of the hollow shaft (6),
h) means (23, 28, 29, 67) for releasable clamping of feed unit (2) and peeling machine housing (7).

2. Peeling machine as per Claim 1, **characterised by** the following feature:
i) the guide rails (23, 24) are an integral part of the means (23, 28, 29, 67) for clamping feed unit (2) and peeling machine housing (7).

3. Peeling machine as per one of the Claims 1 or 2, with a guide system (5), for the bars or tubes to be machined, between the feed unit (2) and the cutter head (26), **characterised by** the following feature:
j) the guide system (5) in front of the cutter head (26) is guided and movable on the rails (23, 24).

4. Peeling machine as per Claim 1, **characterised by** the following feature:
k) the guide rails (23, 24), together with the axis of rotation (62) of the cutter head (26), form an angle between 90° and 270°.

5. Peeling machine as per one of the Claims 1, 2 or 3, with a guide system (5), for the bars or tubes to be machined, between the feed unit (2) and the cutter head (26), **characterised by** the following features:
l) a cutter adjustment assembly (63) on the hollow shaft (6) is guided on the rails (23, 24),
m) the cutter adjustment assembly (63) is installed in a supporting frame (36), which is inserted in the peeling machine housing (7) for the cutter head (26) in the axial direction (62) and includes the cutter head and the hollow shaft (6) bearing it.

6. Peeling machine as per Claim 5, **characterised by** the following feature:
n) means (64, 65) for fastening the cutter adjustment assembly (63) on the guide system (5) on the inlet side of the cutter head (26) or on the feed unit (2).

7. Peeling machine as per Claim 1, **characterised by** the following feature:
o) the feed unit (2) is guided on at least one additional rail (35), parallel to the other guide rails (23, 24).

8. Peeling machine as per Claim 1, **characterised by** the following feature:
p) the feed unit (2) is fitted with a drive unit for movement in the direction of the guide rails (23, 24).

9. Peeling machine as per Claim 3, **characterised by** the following feature:
q) means (64, 65) for fastening the guide system (5), located on the inlet side in front of the cutter head (26), on the feed unit (2).

10. Peeling machine as per Claim 1, **characterised by** the following feature:
r) at least one assembly (5) guided on the guide rails (23, 24) is split in the longitudinal direction (62),
s) the parting line (52) of the split assembly (5) passes through the guide rails (23).

## Revendications

1. Machine à écroûter (1) pour barres (21) et tubes présentant les caractéristiques suivantes:
a) un agrégat d'introduction (2) du côté entrée de la machine à écroûter (1),
b) une tête porte-lames tournante (26),
c) la tête porte-lames tournante (26) est formée, du côté frontal au côté entrée, à un arbre creux (6) tournant sur roulements dans le bâti (7) de la machine,
d) des moyens (12) pour extraire la pièce finie d'écroutage de la machine à écroûter (1),
e) au moins deux rails de guidage (23, 24) au bâti (7) de la machine à écroûter (1),
f) les rails de guidage (23, 24) s'étendent parallèlement à l'axe de rotation (62) de la tête porte-lames (26),
**caractérisée par** les propriétés suivantes:
g) l'agrégat d'introduction (2) et le bâti (7) de la machine à écroûter peuvent être déplacés, relativement l'un par rapport à l'autre, dans le sens de l'axe de rotation (62) de l'arbre creux (6),
h) des moyens (23, 28, 29, 67) pour le serrage desserrable de l'agrégat d'introduction (2) et du bâti (7) de la machine à écroûter.

2. Machine à écroûter suivant revendication 1, **caractérisée par** la propriété suivante:
i) les rails de guidage (23, 24) font partie des moyens (23, 28, 29, 67) pour le serrage de l'agrégat d'introduction (2) et du bâti (7) de la machine à écroûter.

3. Machine à écroûter suivant une des revendications 1 ou 2 avec un système de guidage (5) pour les barres ou tubes à usiner, situé entre l'agrégat d'introduction (2) et la tête porte-lames (26), **caractérisée par** la propriété suivante:
j) le système de guidage (5) devant la tête porte-lames (26) est guidé aux rails (23, 24) et mobile.

4. Machine à écroûter suivant revendication 1, **caractérisée par** la propriété suivante:
k) les rails de guidage (23, 24) forment avec l'axe de rotation (62) de la tête porte-lames (26) un angle entre 90° et 270°.

5. Machine à écroûter suivant une des revendications 1, 2 ou 3 avec un système de guidage (5) pour les barres ou tubes à usiner, situé entre l'agrégat d'introduction (2) et la tête porte-lames (26), **caractérisée par** les propriétés suivantes:
l) un ensemble (63) de réglage de lames à l'arbre creux (6) est guidé aux rails (23, 24),
m) l'ensemble (63) de réglage de lames est monté dans un cadre porteur (36) qui est enfiché, dans le sens de l'axe (62), dans le bâti (7) de la machine à écroûter pour la tête porte-lames (26) et qui renferme la tête porte-lames ou l'arbre creux (6) portant celle-ci.

6. Machine à écroûter suivant revendication 5, **caractérisée par** la propriété suivante:
n) des moyens (64, 65) pour la fixation de l'ensemble (63) de réglage de lames au système de guidage (5), du côté entrée de la tête porte-lames (26) ou à l'agrégat d'introduction (2).

7. Machine à écroûter suivant revendication 1, **caractérisée par** la propriété suivante:
o) l'agrégat d'introduction (2) est guidé à au moins un rail additionnel (35) parallèle aux autres rails de guidage (23, 24).

8. Machine à écroûter suivant revendication 1, **caractérisée par** la propriété suivante:
p) à l'agrégat d'introduction est prévu un entraînement pour le déplacement dans le sens des rails de guidage (23, 24).

9. Machine à écroûter suivant revendication 3, **caractérisée par** la propriété suivante:
q) des moyens (64, 65) pour la fixation, à l'agrégat d'introduction (2), du système de guidage (5) disposé du côté entrée devant la tête porte-lames (26).

10. Machine à écroûter suivant revendication 1, **caractérisée par** les propriétés suivantes:
r) au moins un des ensembles (5) guidés aux rails de guidage (23, 24) est divisé dans le sens longitudinal (62),
s) la fente de séparation (52) de l'ensemble divisé (5) passe par le rail de guidage (23).
